# EUROPEAN PATENT APPLICATION

(11) **EP 2 172 850 A2**
(43) Date of publication of application: **07.04.2010**
(21) Application number: 09171912.0
(22) Date of filing: 01.10.2009
(51) Int. Cl.: G06F 17/30, H04N 5/445

(54) **Information processing apparatus, information acquisition method, recording medium recording information acquisition program, and information retrieval system**

(30) Priority: 01.10.2008 JP 2008256468
(71) Applicant: Sony Corporation, Minato-ku Tokyo 108-0075 (JP)
(72) Inventor: Takahashi, Kazuaki, Tokyo 108-0075 (JP)
(74) Representative: Beder, Jens

(57) **Abstract**

An information processing apparatus includes: a content-information acquisition section obtaining content information including character information on a content; a keyword acquisition section transmitting the content information obtained by the content-information acquisition section to a keyword extraction server extracting a keyword from the content information and obtaining the keyword extracted from the content information; a retrieval-information acquisition section transmitting the keyword obtained by the keyword acquisition section to a retrieval server retrieving information on the Internet by the keyword and obtaining the information retrieved by the keyword from the retrieval server; and a display control section displaying the information obtained by the retrieval-information acquisition section to a display section.

## Description

### BACKGROUND OF THE INVENTION

### 1. Field of the Invention

The present invention relates to an information processing apparatus, an information acquisition method, a recording medium recording an information acquisition program, and an information retrieval system. For example, the present invention is preferably applied to the case of obtaining various kinds of information on a program.

### 2. Description of the Related Art

In recent years, EPG (Electronic Program Guide) information has been widely used as information on programs to be broadcast. The EPG information, namely "electronic program guide information", includes a program title, a broadcasting station name, broadcasting date and time, a program summary, program details, performer names, a genre, etc., as program information.

The EPG information is provided, for example from a broadcasting station together with a program video and program sound, or from a predetermined server on the Internet to various apparatuses.

For example, a television receiver generates and displays a program table on the basis of the obtained EPG information, thereby presenting the program information of the programs to be broadcast. And the television receiver can change the channel to a program selected by a user from the program table, and can make a reservation to view the program selected by a user from the program table.

Also, For example, a program recording apparatus generates a program table on the basis of the obtained EPG information, and displays the program table on an external display, thereby presenting the program information on the programs to be broadcast to the user. And the program recording apparatus can make a reservation for recording the program selected by the user from the program table.

In this manner, the television receiver and the program recording apparatus present the program information on the programs to be broadcast to the user with the use of the EPG information, thereby allowing the user to easily select a desired program.

Further, there has been a proposal for a character input apparatus making it easy to input characters by extracting words from the character information (a program summary, program details, etc.) included in the obtained EPG information and displaying the words on the display as candidates at the time of inputting characters (for example, refer to Japanese Unexamined Patent Application Publication No. 2004-297202).

### SUMMARY OF THE INVENTION

In recent years, many of the television receivers, the program recording apparatuses, etc., have a function of connecting to the Internet. It is thought that, for example, if a television receiver obtains information retrieved by a retrieval server on the Internet using a word extracted from the EPG information, the user can be provided with information not included in the EPG information as information on a program.

However, in order to extract words from the EPG information, it is necessary to have much information, such as grammatical rules, a word dictionary, etc. Accordingly, if such information is stored in the television receiver, it is necessary to increase the memory capacity of the television receiver.

Also, in order to extract words from the EPG information, morphological analysis is commonly used. However, if the morphological analysis is performed by the television receiver together with other processing, it is necessary to improve the processing power of the television receiver.

That is to say, if the television receiver obtains information from a retrieval server using a word extracted from the EPG information as a retrieval keyword, it is possible to easily provide much information on a program to the user. However, the configuration of the television receiver becomes complicated at the same time.

The present invention has been made in view of the above-described points. It is desirable to propose an information processing apparatus, an information acquisition method, a recording medium recording information acquisition program, and an information retrieval system, which can easily provide the user with more information on a content in spite of having a simple configuration.

According to an embodiment of the present invention, there is provided an information processing apparatus including: a content-information acquisition section obtaining content information including character information on a content; a keyword acquisition section transmitting the content information obtained by the content-information acquisition section to a keyword extraction server extracting a keyword from the content information and obtaining the keyword extracted from the content information; a retrieval-information acquisition section transmitting the keyword obtained by the keyword acquisition section to a retrieval server retrieving information on the Internet by the keyword and obtaining the information retrieved by the keyword from the retrieval server; and a display control section displaying the information obtained by the retrieval-information acquisition section to a display section.

By this means, in an information processing apparatus according to the present invention, it is possible to provide the user with information obtained as a result of a retrieval by an external server on the basis of a keyword extracted from content information without the user's keyword input operation, etc.

By the present invention, it is possible for an information processing apparatus to provide the user with information obtained as a result of a retrieval by an external server on the basis of a keyword extracted from content information without the user's keyword input operation, etc. Accordingly, by the present invention, it is possible to achieve an information processing apparatus, an information acquisition method, a recording medium recording information acquisition program, and an information retrieval system, which can easily provide the user with more information on a content in spite of having a simple configuration.

### BRIEF DESCRIPTION OF THE DRAWINGS

Fig. 1 is a schematic diagram illustrating a configuration of an information retrieval system;
Fig. 2 is a block diagram illustrating an internal configuration of a TV receiver;
Fig. 3 is a block diagram illustrating an internal configuration of a widget-list providing server;
Fig. 4 is a block diagram illustrating an internal configuration of a widget providing server;
Fig. 5 is a block diagram illustrating an internal configuration of a program-information providing server;
Fig. 6 is a block diagram illustrating an internal configuration of a keyword extraction server;
Fig. 7 is a block diagram illustrating an internal configuration of a retrieval server;
Fig. 8 is a schematic diagram used for explaining a display of a program video;
Fig. 9 is a schematic diagram used for explaining a display of a widget list;
Fig. 10 is a schematic diagram illustrating a retrieval widget screen (1);
Fig. 11 is a schematic diagram illustrating a retrieval widget screen (2);
Fig. 12 is a schematic diagram illustrating a retrieval widget screen (3); and
Fig. 13 is a flowchart illustrating an operation processing procedure of the TV receiver.

### DESCRIPTION OF THE PREFERRED EMBODIMENTS

In the following, a description will be given of an embodiment of the present invention with reference to the drawings.

### 1. Configuration of information retrieval system

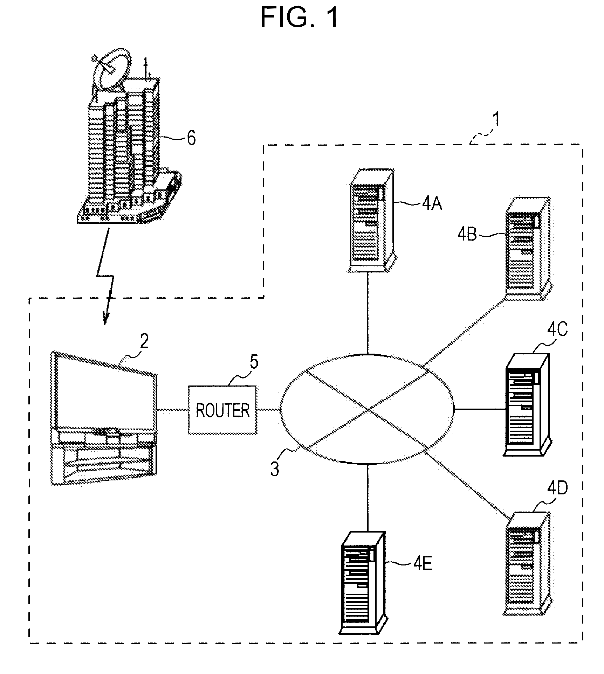

Referring to Fig. 1, reference numeral 1 denotes an information retrieval system providing a user (viewer) with various kinds of information retrieved on a program as a broadcasting content.

The information retrieval system 1 includes a television receiver (also called a TV receiver) 2 having a function of connecting to the Internet and a plurality of servers 4A to 4E on the Internet 3. The TV receiver 2 is capable of communicating with the plurality of servers 4A to 4E by connecting to the Internet 3 through a router 5.

The TV receiver 2 receives a television broadcasting wave (also called a TV broadcasting wave) transmitted from a broadcasting station 6, and extracts and outputs a program video and program sound from the TV broadcasting wave, thereby allowing the user to view the program.

The server 4A out of the plurality of servers 4A to 4E is a server which provides the TV receiver 2 with the program information of any program obtained from the EPG information. The server 4A is also called a program-information providing server 4A.

The server 4B is a server which provides the TV receiver 2 with a catalog (that is to say, a list) of applications operable on the TV receiver 2. In this regard, an application mentioned here means a program achieving a simple function, and is called a "widget" or a "gadget" (called a "widget" here). The server 4B is called a widget-list providing server 4B.

The server 4C is a server which provides the TV receiver 2 with a retrieval widget, which is one of the widgets described in a list of widgets (this is also called a "widget list") provided from the widget-list providing server 4B. To put it simply, the retrieval widget, which will be described later in detail, is an application in which various kinds of information about the program on the Internet 3 is retrieved and displayed together with the video of the program. The server 4C is also called a widget providing server 4C.

The server 4D is a server which extracts, as keywords, nouns (a program title, performer names, etc.) from a character string included in the program information. The server 4D is also called a keyword extraction server 4D.

The server 4E is a server which retrieves information on the Internet 3 using the keyword as a retrieval condition. The server 4E is also called a retrieval server 4E.

In the information retrieval system 1, the TV receiver 2 obtains a widget list from the widget-list providing server 4B, and displays the widget list. When a retrieval widget is selected from the widget list by a user's operation, the TV receiver 2 obtains the retrieval widget from the widget providing server 4C, and displays a screen (this is also called a retrieval widget screen) on the basis of the retrieval widget.

Next, the TV receiver 2 obtains the program information currently being broadcast from the program-information providing server 4A. The TV receiver 2 sends, for example, the program information of the program the user is currently viewing, out of the program information, to the keyword extraction server 4D. As a result, the TV receiver 2 obtains, from the keyword extraction server 4D, the keyword extracted from the program information.

The TV receiver 2 sends the obtained keyword to the retrieval server 4E, and obtains the information retrieved on the Internet 3 from the retrieval server 4E using the keyword as a retrieval condition as a result, to display the information on the retrieval widget screen.

In this manner, in the information retrieval system 1, keywords are automatically extracted from the program information of the program currently being viewed, and the information retrieved on the Internet 3 using the keyword is displayed on the TV receiver 2.

Thus, in the information retrieval system 1, it is possible to provide the user with the information retrieved on the Internet 3 on the basis of the keyword extracted from the program information of the program currently being viewed without the user operating a keyword input operation, etc.

### 2. Internal configuration of TV receiver

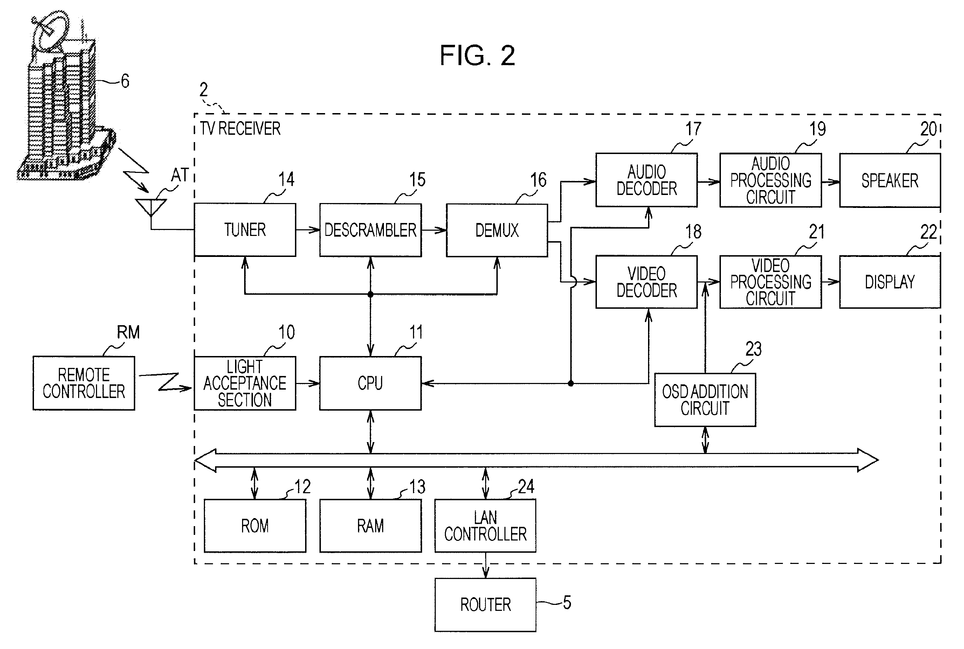

Next, a description will be given of an internal configuration of the TV receiver 2 with reference to Fig. 2. The TV receiver 2 receives an infrared signal from a remote controller RM at a light acceptance section 10. The light acceptance section 10 obtains an operation signal corresponding to the user's operation from the received infrared signal, and sends the signal to a CPU (Central Processing Unit) 11.

The CPU 11 loads the programs written in a ROM (Read Only Memory) 12 to a RAM (Random Access Memory) 13. Next, the CPU 11 performs overall control and achieves various functions by executing the programs loaded in the RAM 13 in accordance with the operation signal sent from the light acceptance section 10.

Specifically, in the TV receiver 2, a TV broadcasting signal sent from an antenna AT which has received a TV broadcasting wave is input into a tuner 14. The tuner 14 obtains a transport stream of the channel specified, for example, by an operation of the remote controller RM under the control of the CPU 11, and sends the stream to a descrambler 15.

The descrambler 15 obtains a key for releasing the scramble of the transport stream from an IC card (not shown in the figure) loaded in the TV receiver 2 under the control of the CPU 11, and releases the scramble of the transport stream having been sent by this key. And the transport stream whose scramble has been released is sent to a demultiplexer (DEMUX) 16.

Under the control of the CPU 11, the demultiplexer 16 separates audio data and video data from the transport stream whose scramble has been released, sends the audio data to an audio decoder 17, and sends the video data to the video decoder 18.

Under the control of the CPU 11, the audio decoder 17 decodes the audio data having been sent to obtain the program audio data, and sends the data to an audio processing circuit 19. The audio processing circuit 19 performs audio processing on the audio data having been sent to obtain a program audio signal, and sends the signal to a speaker 20. As a result, the speaker 20 outputs the program sound on the basis of the program audio signal.

On the other hand, the video decoder 18 decodes the video data having been sent under the control of the CPU 11 to obtain the program video data, and sends the data to an video processing circuit 21. The video processing circuit 21 performs audio processing on the program video data having been sent to obtain a program video signal, and sends the signal to a display 22. As a result, the program video based on the program video signal is displayed on the display 22.

In this manner, the TV receiver 2 allows the user to view the program.

Also, the video processing circuit 21 performs video processing on the screen data sent from an OSD (On Screen Display) addition circuit 23 to obtain a screen signal, and sends this signal to the display 22. As a result, various screens based on the screen signal are displayed on the display 22. In this regard, the OSD addition circuit 23 generates various kinds of screen data under the control of the CPU 11.

Also, the TV receiver 2 is connected to the router 5 through a LAN (Local Area Network) controller 24, and is capable of communicating with various servers 4 on the Internet 3 through the router 5.

Further, the TV receiver 2 executes a widget downloaded from the widget providing server 4C on the Internet to make it possible to achieve a function in accordance with the widget.

One of the widgets is the above-described retrieval widget, and the details of the functions (also called "program-related information retrieval function") achieved by the retrieval widget will be described later.

### 3. Internal configurations of various servers

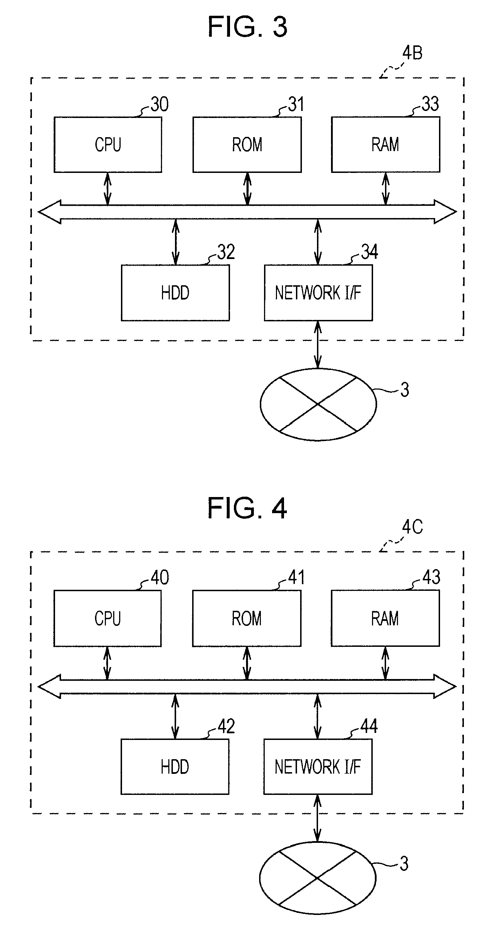

Next, descriptions will be given of the internal configurations of the various servers 4. First, a description will be given of the internal configuration of the widget-list providing server 4B with reference to Fig. 3.

### 3.1 Internal configuration of widget-list providing server

In the widget-list providing server 4B, a CPU 30 loads a program stored in a ROM 31 or a hard disk drive 32 into a RAM 33, and executes the program to perform overall control.

Also, the widget-list providing server 4B is connected to the Internet 3 through a network interface 34, and is capable of communicating with the TV receiver 2 through the Internet 3 and the router 5.

Here, it is assumed that the widget-list providing server 4B has received a transmission request for a widget list from the TV receiver 2 through the network interface 34. Then, the CPU 30 reads the widget list from the hard disk drive 32, and transmits the widget list to the TV receiver 2 through the network interface 34.

In this manner, the widget-list providing server 4B provides the TV receiver 2 with a widget list.

In this regard, the widgets described on the widget-list include, for example, a weather widget, a fortune-telling widget, a news widget, a calendar widget, etc., in addition to the above-described retrieval widget. These widgets are also widgets executable by the TV receiver 2 in the same manner as the retrieval widget.

For example, the weather widget is a widget which displays information on a weather forecast obtained from a predetermined server on the Internet 3 together with a program video. Also, the fortune-telling widget is a widget which displays the result of fortune telling obtained from a predetermined server on the Internet 3 together with a program video. Further, the news widget is a widget which displays news obtained from a predetermined server on the Internet 3 together with a program video. Moreover, the calendar widget is an application which displays a calendar together with a program video.

In this manner, the widgets described on the widget-list are applications for achieving a function of displaying various kinds of information on the TV receiver 2 together with a program video.

### 3.2 Internal configuration of widget providing server

Next, a description will be given of the widget providing server 4C with reference to Fig. 4. In the widget providing server 4C, a CPU 40 loads a program stored in a ROM 41 or a hard disk drive 42 into a RAM 43, and executes the program to perform overall control.

Also, the widget-list providing server 4C is connected to the Internet 3 through a network interface 44, and is capable of communicating with the TV receiver 2 through the Internet 3 and the router 5.

Here, it is assumed that the widget-list providing server 4C has received a transmission request for a retrieval widget from the TV receiver 2 through the network interface 44. Then, the CPU 40 reads the retrieval widget from the hard disk drive 42, and transmits the retrieval widget to the TV receiver 2 through the network interface 44.

In this manner, the widget-list providing server 4C provides the TV receiver 2 with the widget list.

### 3.3 Internal configuration of program-information providing server

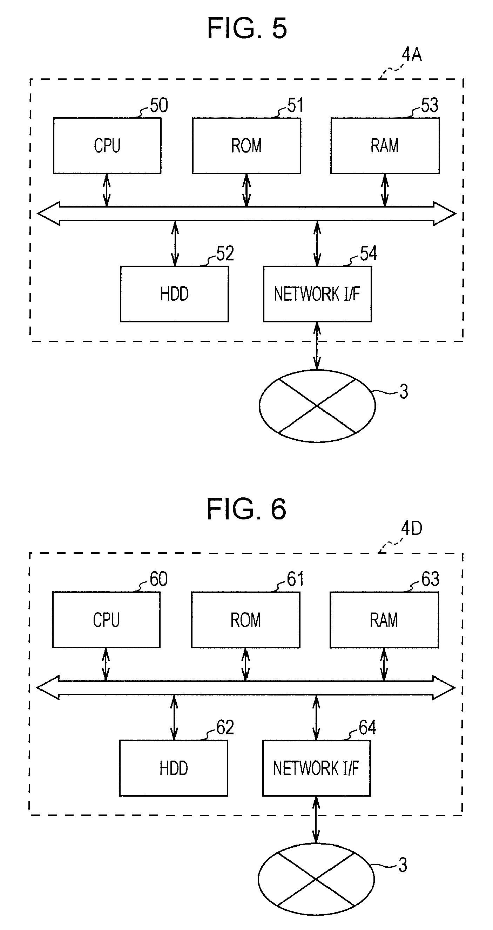

Next, a description will be given of the program-information providing server 4A with reference to Fig. 5. In the widget providing server 4A, a CPU 50 loads a program stored in a ROM 51 or a hard disk drive 52 into a RAM 53, and executes the program to perform overall control.

Also, the program-information providing server 4A is connected to the Internet 3 through a network interface 54, and is capable of communicating with the TV receiver 2 through the Internet 3 and the router 5.

Here, it is assumed that the program-information providing server 4A has received a transmission request for the program information of a program currently being broadcast from the TV receiver 2 through the network interface 54. Then, the CPU 50 extracts the program information of the program currently being broadcast from the EPG information stored in the hard disk drive 52, and transmits the information to the TV receiver 2 through the network interface 54.

In this manner, the program-information providing server 4A provides the TV receiver 2 with the program information. In this regard, the hard disk drive 52 of the program-information providing server 4A stores the latest EPG information all the time, for example by the EPG information being transmitted from a broadcasting station sever not shown in the figure.

### 3.4 Internal configuration of keyword extraction server

Next, a description will be given of the keyword extraction server 4D with reference to Fig. 6. In the keyword extraction server 4D, a CPU 60 loads a program stored in a ROM 61 or a hard disk drive 62 into a RAM 63, and executes the program to perform overall control.

Also, the keyword extraction server 4D is connected to the Internet 3 through a network interface 64, and is capable of communicating with the TV receiver 2 through the Internet 3 and the router 5.

Here, it is assumed that the keyword extraction server 4D has received a keyword extraction request from the TV receiver 2 together with the program information through the network interface 64. Then, the CPU 60 executes a morphological analysis program stored in the hard disk drive 62 to extract a keyword from the received program information.

Specifically, the CPU 60 divides the program information as character information into minimum character strings having meanings in a language on the basis of grammatical rule data and word dictionary data stored in the hard disk drive 62, and determines a part of speech of each character string. Then, the CUP 60 extracts a proper noun out of each character string as a keyword.

Then, the CPU 60 transmits the extracted keyword to the TV receiver 2 through the network interface 64.

In this manner, the keyword extraction server 4D extracts a keyword from the program information sent from the TV receiver 2, and returns the keyword to the TV receiver 2.

### 3.5 Internal configuration of retrieval server

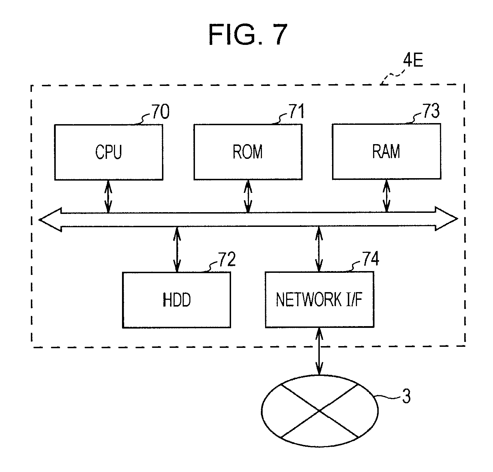

Next, a description will be given of the retrieval server 4E with reference to Fig. 7. In the retrieval server 4E, a CPU 70 loads a program stored in a ROM 71 or a hard disk drive 72 into a RAM 73, and executes the program to perform overall control.

Also, the retrieval server 4E is connected to the Internet 3 through a network interface 74, and is capable of communicating with the TV receiver 2 through the Internet 3 and the router 5.

Here, it is assumed that the retrieval server 4E has received a retrieval request from the TV receiver 2 together with the retrieval keyword through the network interface 74. Then, the CPU 70 retrieves information from a vast amount of information (specifically, character information and images) collected from the Internet 3 using the received retrieval keyword as a retrieval condition.

In this regard, for example if the retrieval keyword is a name of a certain performer, the information to be retrieved at this time includes a profile and a photograph of the person.

Then, the CPU 70 transmits the information obtained as a result of the retrieval (character information and images) to the TV receiver 2 through the network interface 64.

In this manner, the retrieval server 4E retrieves information on the Internet 3 using the retrieval keyword sent from the TV receiver 2, and returns the obtained information to the TV receiver 2. In this regard, the hard disk drive 72 of the retrieval server 4E stores the latest information all the time by information collected from the Internet 3 at regular intervals.

### 4. Program-related-information retrieval function by retrieval widget

Here, a detailed description will be given of a function of retrieving program-related information, which is achieved by the TV receiver 2 executing a retrieval widget.

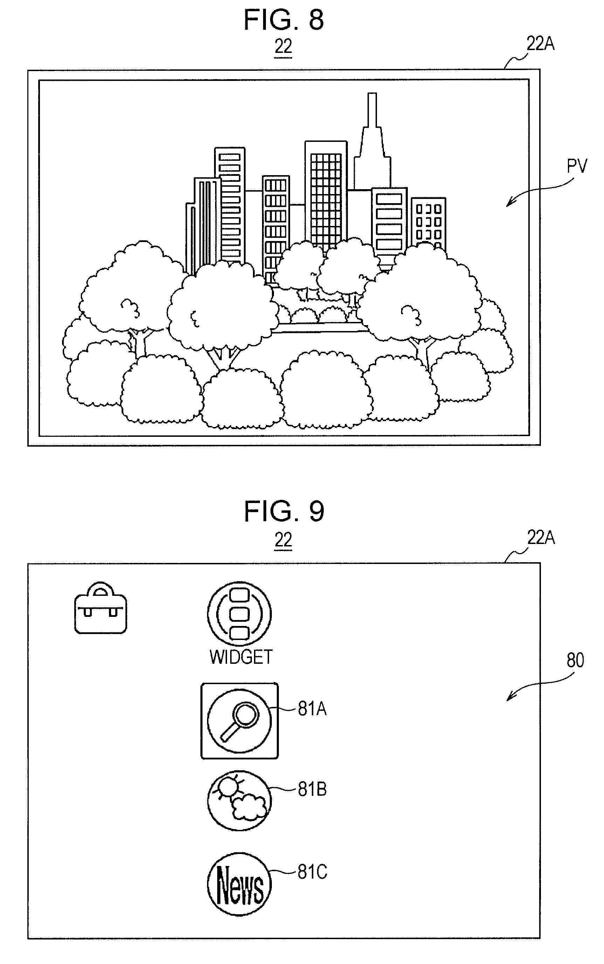

First, it is assumed that the TV receiver 2 is outputting the video and sound of the program currently being broadcast on a channel selected through the remote controller RM. At this time, as shown in Fig. 8, a program video PV is displayed with substantially the same display size as the display screen 22A on the display 22 of the TV receiver 2.

Here, it is assumed that a predetermined button (for example, a widget button) of the remote controller RM is pressed. Then, the CPU 11 of the TV receiver 2 sends a transmission request for a widget list to the widget-list providing server 4B through the LAN controller 24 to obtain a widget list from the widget-list providing server 4B.

The CPU 11 controls the video decoder 18 and the OSD addition circuit 23 to display the widget list screen 80 (shown in Fig. 9) based on the obtained widget list on the display 22 in place of the program video PV.

On the widget list screen 80, icons 81 (for example, 81A to 81C) corresponding to the individual widgets described on the widget list are vertically arranged together with the widget names to be displayed on a list. The individual icons 81 displayed on the list on the widget list screen 80 can be selected by an up-down button (not shown in the figure) of the remote controller RM, and can be selectively determined by a decision button (not shown in the figure).

Here, it is assumed that an icon 81A corresponding to a retrieval widget is selected and determined out of the individual icons 81 by an operation of the remote controller RM. Then, the CPU 11 sends a transmission request for a retrieval widget to the widget providing server 4C through the LAN controller 24 to obtain the retrieval widget from the widget providing server 4C, and executes the widget.

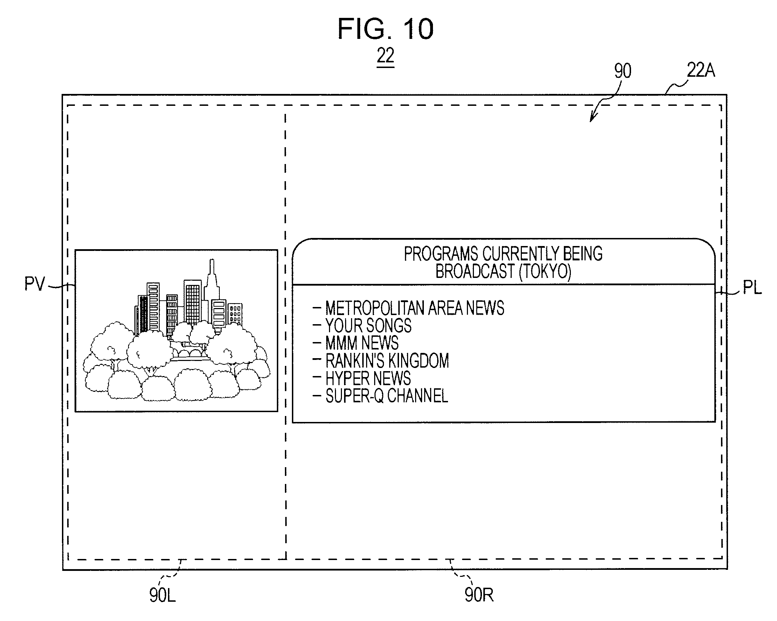

Then, the CPU 11 sends a transmission request for the program information of the program currently being broadcast to the widget providing server 4C through the LAN controller 24 to obtain the program information of the program currently being broadcast from the widget providing server 4C. Also, the CPU 11 controls the video decoder 18 and the OSD addition circuit 23 to display the retrieval widget screen 90 (shown in Fig. 10) based on the obtained retrieval widget on the display 22 in place of the widget list screen 80.

The retrieval widget screen 90 includes a display area 22A of the display 22, which is divided by two, that is to say, a left area (this is also called a "left-side area") 90L and a right area (this is also called a "right-side area") 90R.

Here, the program video PV of the channel selected until the widget button has been pressed is displayed in the left-side area 90L. Also, a list (this is also called a "program title list") PL of the program titles included in the program information of the program currently being broadcast, which has been obtained from the program-information providing server 4A, is displayed in the right-side area 90R.

The program title list PL includes a list display in which program titles currently being broadcast on individual channels are vertically arranged. The individual program titles can be selected by an up-down button (not shown in the figure) of the remote controller RM, and selectively determined by a decision button (not shown in the figure).

In this regard, the CPU 11 obtains the program information from the program-information providing server 4A at regular intervals to update the contents of the program title list PL.

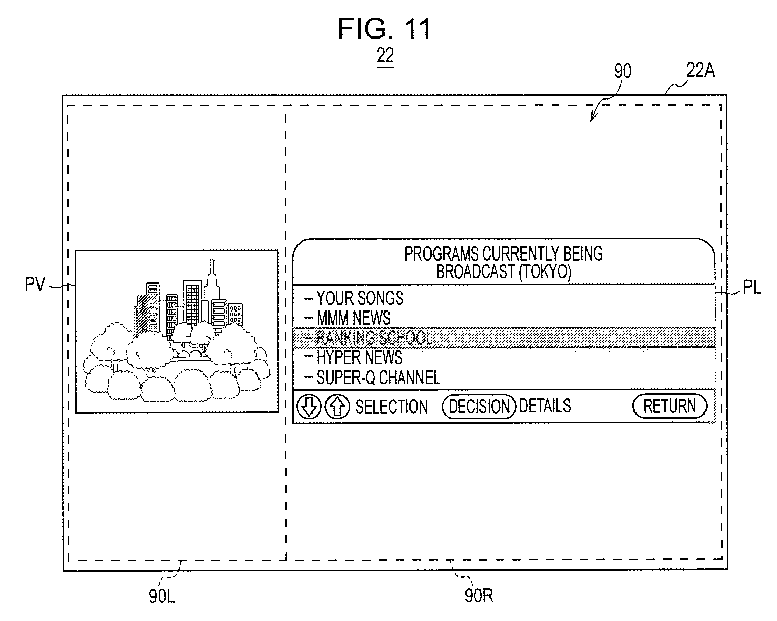

Here, as shown in Fig. 11, it is assumed that any program title is selected and determined from the program title list PL by an operation of the remote controller RM.

Then, the CPU 11 changes the program video PV to be displayed in the left-side area 90L of the retrieval widget screen 90 to the program video PV of the channel corresponding to the program title selectively determined. Also, at this time, the CPU 11 extracts the program information of the program identified by the selectively determined program title from the latest program information obtained immediately before.

Next, the CPU 11 sends a keyword extraction request to the keyword extraction server 4D together with the program information through the LAN controller 24.

In this regard, here, the CPU 11 sends to the keyword extraction server 4D, for example, the program title, the program summary, the program details, and the performer names out of a program title, a broadcasting station name, broadcasting date and time, a program summary, program details, performer names, a genre, etc., included in the program information.

As a result, the CPU 11 obtains, from the keyword extraction server 4D, keywords (that is to say, proper nouns) extracted by the keyword extraction server 4D from the program title, the program summary, the program details, and the performer names.

Next, the CPU 11 sorts the obtained keywords in a predetermined sequence to generate a keyword list, and sends the beginning keyword on the keyword list as a retrieval keyword to the retrieval server 4E together with a retrieval request through the LAN controller 24.

As a result, the CPU 11 obtains the character information and the images retrieved by the retrieval server 4E on the Internet 3 using the retrieval keyword from the retrieval server 4E.

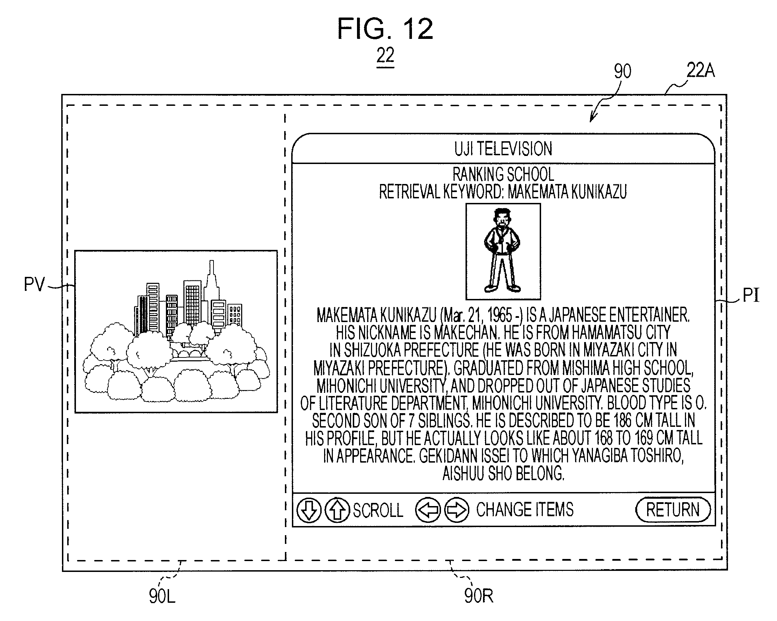

Then, as shown in Fig. 12, the CPU 11 displays, in the right-side area 90R of the retrieval widget screen 90, program-related information PI including the obtained character information and images (the information retrieved on the basis of the retrieval keyword) in place of the program title list PL.

Specifically, a name of a broadcasting station currently broadcasting the program that the user is viewing, that is to say, the name (for example, "Uji television") of the broadcasting station broadcasting the program displayed in the left-side area 90L as the program video PV is displayed at the upper end of the right-side area 90R at this time.

Further, the program title (for example, "Ranking School") of the program currently being viewed by the user is displayed at the lower side of the broadcasting station name. Further, the retrieval keyword (for example, "Makemata Kunikazu", who is a performer in this program) extracted from the program information of the program the user is currently viewing is displayed at the lower side of the program title.

Moreover, the image (for example, a photograph of "Makemata Kunikazu") retrieved by the retrieval keyword is displayed at the lower side of the retrieval keyword. Moreover, the character information (for example, a profile of "Makemata Kunikazu") retrieved on the basis of the retrieval keyword is displayed at the lower side of the image. The character information can be scrolled by the up-down button of the remote controller RM.

In this regard, in reality, the TV receiver 2 does not obtain an image from the retrieval server 4E, but obtains the address of the image on the Internet 3, and then obtains the image from that address.

In this manner, a broadcasting station name, a program title, a retrieval keyword, and the image and the character information retrieved on the basis of the retrieval keyword are displayed in the right-side area 90R at this time as the program related information PI on the program the user is currently viewing.

Also, the retrieval keyword displayed in the right-side area 90R at this time can be changed by the right-left button of the remote controller RM.

Here, for example, it is assumed that the right button of the remote controller RM has been pressed. Then, the CPU 11 selects the keyword next to the keyword selected as the retrieval keyword before, and sends this as a new retrieval keyword together with a retrieval request to the retrieval server 4E.

As a result, the CPU 11 obtains, from the retrieval server 4E, new character information and image retrieved on the Internet 3 on the basis of the new retrieval keyword from the retrieval server 4E. And the CPU 11 updates the display contents of the right-side area 90R by the new retrieval keyword and the newly obtained image and the character information.

In this manner, the CPU 11 can change the retrieval keyword in response to an operation of the remote controller RM, and thereby can change the display contents of the right-side area 90R.

Further, here, for example, it is assumed that the decision button of the remote controller RM is pressed. Then, the CPU 11 controls the video decoder 18 and the OSD addition circuit 23 to display a Web browser screen (not shown in the figure) on the display 22 in place of the retrieval widget screen 90.

At this time, for example, a destination site from which the image or the character information has been obtained is displayed on the Web browser screen.

As described above, it is possible for the TV receiver 2 to provide the user with not only the program information, but also the information on the Internet 3, which is retrieved by the retrieval server 4E on the basis of the keyword extracted from the program information, as information on the program while allowing the user to view the program.

Also, in the information retrieval system 1, the extraction of a keyword from the program information is automatically performed by the keyword extraction server 4D, and thus it is possible to provide the user with information retrieved on the basis of the keyword without the user's operation of inputting the keyword, etc.

Further, the processing load of the TV receiver 2 can be lowered by the keyword extraction server 4D performing the extraction of the keyword in this manner.

Further, it is not necessary for the TV receiver 2 to store grammatical rule data and word dictionary data, which are necessary for the keyword extraction processing by the keyword extraction server 4D performing the extraction of the keyword in this manner, and thus the storage capacity of the TV receiver 2 can be reduced for that amount of data.

Further, the grammatical rule data and the word dictionary data are stored not in the TV receiver 2, but in the keyword extraction server 4D, and thus the update of the data can be easily performed on the keyword extraction server 4D.

### 5. Operation processing procedure

Next, a description will be given of the processing procedure (this is also called "operation processing procedure") by the TV receiver 2 from the acquisition of a widget list to the display of the information retrieved on the basis of the retrieval keyword. Incidentally, the operation processing procedure is the processing procedure that is executed by the CPU 11 of the TV receiver 2 in accordance with the program installed in the ROM 12.

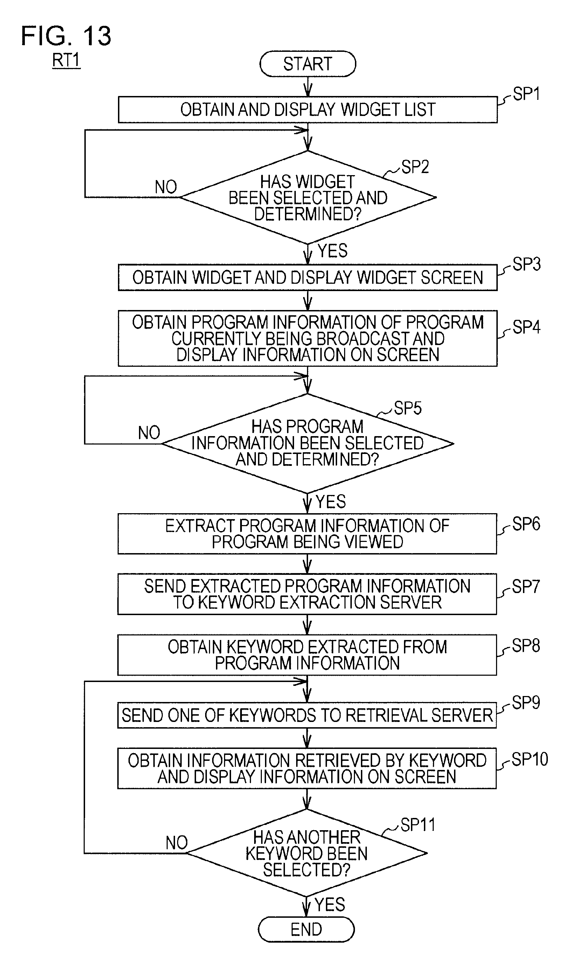

For example, if the CPU 11 recognizes that the widget button of the remote controller RM is pressed, the CPU 11 starts operation processing procedure RT1 shown in Fig. 13, and the processing proceeds to step SP1.

In step SP1, the CPU 11 obtains a widget list from the widget-list providing server 4B, and displays the widget list on the display 22 as the widget list screen 80. The processing proceeds to the next step SP2.

In step SP2, the CPU 11 waits until a widget is selectively determined by the operation of the remote controller RM, and the processing proceeds to the next step SP3. In this regard, here, it is assumed that a retrieval widget has been selectively determined.

In step SP3, the CPU 11 obtains the retrieval widget from the widget providing server 4C, displays the retrieval widget screen 90 on the basis of the retrieval widget, and the processing proceeds to the next step SP4.

In step SP4, the CPU 11 obtains the program information of the program currently being broadcast from the program-information providing server 4A, and displays a list (program title list PL) of the program titles included in the program information in the right-side area 90R of the retrieval widget screen 90. And the processing of the CPU 11 proceeds to the next step SP5.

In step SP5, the CPU 11 waits until a program title is selectively determined from the program title list PL. When a program title of the program to be viewed is selectively determined, the processing proceeds to the next step SP6.
In this regard, at this time, the CPU 11 changes the program video PV displayed in the left-side area 90L of the retrieval widget screen 90 to the program video PV of the program whose program title selectively determined.

In step SP6, the CPU 11 extracts the program information of the program (that is to say, the program the user is currently viewing) selectively determined from the program information obtained in step SP4, and the processing proceeds to the next step SP7.

In step SP7, the CPU 11 sends the extracted program information (that is to say, the program information of the program the user is currently viewing) to the keyword extraction server 4D, and the processing proceeds to the next step SP8. In step SP8, the CPU 11 obtains, from the keyword extraction server 4D, the keyword extracted by the keyword extraction server 4D from the program information, and the processing proceeds to the next step SP9.

In step SP9, the CPU 11 sends one of the obtained keywords to the retrieval server 4E as a retrieval keyword, and the processing proceeds to the next step SP10. In step SP10, the CPU 11 obtains the retrieved information from the retrieval server 4E using the retrieval keyword as a retrieval condition, and displays this information in the right-side area 90R of the retrieval widget screen 90 in place of the program title list PL. And the processing of the CPU 11 proceeds to the next step SP11.

In step SP11, the CPU 11 determines whether an operation of selecting another retrieval keyword has been performed through the remote controller RM. Here, if determined that an operation for selecting another retrieval keyword has been performed, the CPU 11 selects another retrieval keyword as a new retrieval keyword, and the processing returns to step SP9. The CPU 11 sends the new retrieval keyword to the retrieval server 4E.

On the other hand, if determined that no operation has been performed for selecting another retrieval keyword, the CPU 11 terminates the operation processing procedure RT1.

In accordance with the operation processing procedure RT1 like this, the CPU 11 performs the processing from the acquisition of a widget list to the display of the information retrieved on the basis of the retrieval keyword.

### 6. Operation and advantages

With the above-described configuration, in the information retrieval system 1, the TV receiver 2 obtains a retrieval widget from the widget providing server 4C, and executes the retrieval widget to display the retrieval widget screen 90.

At this time, the program video PV currently being broadcast on the channel selected through the remote controller RM is displayed in the left-side area 90L of the retrieval widget screen 90. Also, at this time, the program titles of the programs currently being broadcast for individual channels, which are obtained by the TV receiver 2 from the program-information providing server 4A, are displayed in the right-side area 90R of the retrieval widget screen 90.

Here, if any program title is selected and determined, the TV receiver 2 changes the program video PV to be displayed in the left-side area 90L to the program video PV of the program title. Also, at this time, the TV receiver 2 sends the program information of the program (that is to say, the program the user is currently viewing) of the program title to the keyword extraction server 4D.

The TV receiver 2 obtains the keywords extracted by the keyword extraction server 4D from the program information, and sends one of the keywords to the retrieval server 4E as the retrieval keyword. The TV receiver 2 obtains the information retrieved by the retrieval server 4E on the Internet 3 using the retrieval keyword from the retrieval server 4E, and displays the information in place of the program title in the right-side area 90R of the retrieval widget screen 90.

Thus, it is possible for the TV receiver 2 to provide the user with the retrieved information on the Internet 3 by the keyword extracted from the program information as information on the program that the user is viewing.

Also, in the information retrieval system 1, the extraction of a keyword from the program information is automatically performed by the keyword extraction server 4D, and thus it is possible for the user to omit a troublesome operation, such as an operation of inputting the keyword, etc.

Also, the keyword extraction server 4D performs the extraction of the keyword instead of the TV receiver 2 in this manner, and thus the processing load of the TV receiver 2 can be lowered accordingly.

Also, it is not necessary for the TV receiver 2 to store grammatical rule data and word dictionary data, which are necessary for the keyword extraction processing by the keyword extraction server 4D performing the extraction of the keyword in this manner, and thus the storage capacity of the TV receiver 2 can be reduced for that amount of data.

With the above-described configuration, it is possible for the TV receiver 2 to request the external server 4 to extract a keyword from the program information, and to provide the user with the information retrieved on the basis of the keyword without the user's operation of inputting the keyword, etc. Accordingly, the TV receiver 2 can easily provide the user with more information on the program as a broadcasting content with a simple configuration.

### 7. Other embodiments

### 7.1 Additional embodiment 1

In this regard, in the above-described embodiment, the TV receiver 2 obtains the program information of the program currently being broadcast from the program-information providing server 4A. However, the present invention is not limited to this. If the TV broadcasting signal includes EPG information, the EPG information may be extracted from the TV broadcasting signal, and the program information of the program currently being broadcast may be obtained from the EPG information.

In this case, the demultiplexer 16 of the TV receiver 2 ought to separate the transport stream into audio data, video data, and the EPG information.

### 7.2 Additional embodiment 2

Also, in the above-described embodiment, the information retrieval system 1 is separately provided with the program-information providing server 4A, the widget-list providing server 4B, the widget providing server 4C, and the keyword extraction server 4D.

The present invention is not limited to this. For example, a server having the functions of both the widget-list providing server 4B and the widget providing server 4C may be provided in place of the widget-list providing server 4B and the widget providing server 4C. Also, one server having the functions of the individual servers 4A to 4E may be provided in place of the individual servers 4A to 4E. In this manner, a server integrating the functions of the individual servers 4A to 4E may be provided.

### 7.3 Additional embodiment 3

Further, in the above-described embodiment, the retrieval server 4E retrieves character information and images on the Internet 3 using the retrieval keyword extracted from the program information, and displays the obtained character information and images to the TV receiver 2.

The present invention is not limited to this. For example, a moving image may be retrieved on the basis of the retrieval keyword extracted from the program information, and the obtained moving image may be displayed on the TV receiver 2 as the program-related information. Also, for example, music may be retrieved, and the obtained music may be played back by the TV receiver 2 together with he display of the program-related information.

In this manner, various kinds of information on the Internet 3 may be retrieved on the basis of the retrieval keyword, and the obtained information (that is to say, the program-related information) may be provided to the user.

Also, on the other hand, a range to be retrieved may be limited. For example, a range from which character information and images are retrieved may be limited to news on the Internet 3, which have been existent within one week. In this manner, it is possible to provide the user with articles covering the program in the latest news and the photographs attached to the articles.

Also, for example, a range to be retrieved may be limited to information on goods that are provided on the Internet 3. Accordingly, it is possible to provide the user with the explanation of the goods and the photograph of the goods for an advertisement as the information on the program. Thus, it can be expected to bring about sales promotion effect of the goods on the program.

Also, such a range may be suitably selected by the user. Thus, it is possible to provide the user with information the user desires as information on the program.

### 7.4 Additional embodiment 4

Further, in the above-described embodiment, information on the Internet 3 is retrieved on the basis of the keyword extracted from the program information. The present invention is not limited to this. The keyword may be used for a viewing reservation of a program and a recording reservation of a program.

For example, a hard disk drive may be included in the TV receiver 2, and programs may be recorded in the hard disk drive. Also, the TV receiver 2 may extract the EPG information from the TV broadcasting signal, and the EPG information may be stored in the hard disk drive.

Under such circumstances, the CPU 11 of the TV receiver 2 may record the keywords extracted from the program information into the hard disk drive as a preference keyword indicating the preference of the user.

The CPU 11 retrieves, from the EPG information, programs whose program information includes a preference keyword recorded in this manner. And the CPU 11 determines the retrieved program to be a recommended program, and makes a viewing reservation or a recording reservation of the recommended program.

In this manner, it is possible to record preference keywords automatically, and to make a viewing reservation or a recording reservation of the program on the basis of the preference keyword.

Also, in a state of displaying a retrieval keyword on the retrieval widget screen 90, if a predetermined button (for example, a keyword registration button) of the remote controller RM is pressed, the displayed keywords may be recorded as preference keywords, etc.

### 7.5 Additional embodiment 5

Further, in the above-described embodiment, the program title list PL or the program-related information PI is displayed on the retrieval widget screen 90 together with the program video PV. The present invention is not limited to this. Only the program title list PL or the program-related information PI may be displayed on the retrieval widget screen 90.

Also, in this case, the CPU 11 may switch the display between the display of the program video PV and the display of the retrieval widget screen 90 in response to the pressing of a predetermined button (for example, a switching screen button) of the remote controller RM, for example.

### 7.6 Additional embodiment 6

Further, in the above-described embodiment, the TV receiver 2 sends one of the keywords extracted from the program information to the retrieval server 4E as a retrieval keyword. The present invention is not limited to this. The TV receiver 2 may send some of the keywords extracted from the program information to the retrieval server 4E as retrieval keywords.

For example, the CPU 11 of the TV receiver 2 may send a program title and a performer name out of the keywords extracted from the program information to the retrieval server 4E as retrieval keywords. By this means, for example, it is possible to retrieve information having a higher relationship with the program than the case of simply using a performer name as a retrieval keyword.

### 7.7 Additional embodiment 7

Further, in the above-described embodiment, the present invention is applied to the retrieval of information on of a TV broadcasting program. The present invention is not limited to this. For example, the present invention may be applied to the retrieval of information on an Internet broadcasting program. Also, the present invention may be applied to the retrieval of information on contents recorded in a recording medium, such as a DVD (Digital Versatile Disc), etc.

For example, a DVD player (not shown in the figure) may be connected to the TV receiver 2, and the video and the sound of the content played back by the DVD player is allowed to be output by the TV receiver 2.

Under these circumstances, the CPU 11 of the TV receiver 2 reads the content information recorded on a DVD, such as a content name, a creator name, etc., of a content (for example, a movie) through the DVD player. And the CPU 11 of the TV receiver 2 obtains keywords extracted from the content information by sending the content information to the keyword extraction server 4D. After that, the same processing as that of the above-described embodiment is performed.

In this manner, the TV receiver 2 allows the user to view the content of a DVD, and at the same time, allows providing the user with information retrieved on the Internet 3 as information on that content.

### 7.8 Additional embodiment 8

Further, in the above-described embodiment, the TV receiver 2 obtains a retrieval widget from the widget providing server 4C. The present invention is not limited to this. The same application as the retrieval widget may be written into the ROM 12 of the TV receiver 2 in advance.

### 7.9 Additional embodiment 9

Further, in the above-described embodiment, the program for executing the operation processing in the TV receiver 2 is written into the ROM 12 of the TV receiver 2. The present invention is not limited to this. The program may be recorded in a predetermined recording medium, and the CPU 11 of the TV receiver 2 may read the program from the recording medium to execute the program. Also, a flash memory may be provided in place of the ROM 12, and the program read from the recording medium may be installed into the flash memory.

Further, the programs may be downloaded from a predetermined server on the Internet 3, and may be installed in the flash memory. In this regard, for a predetermined recording medium, for example, any recording medium, such as a CD (Compact Disc), a DVD, a memory card, etc., may be used.

### 7.10 Additional embodiment 10

Further, in the above-described embodiment, the TV receiver 2, as an information processing apparatus, is provided with the CPU 11 and the LAN controller 24 as the content-information acquisition section, the keyword acquisition section, and the retrieval-information acquisition. Furthermore, the TV receiver 2 is provided with the CPU 11 as the display control section. Moreover, the TV receiver 2 is provided with the tuner 14, the descrambler 15, and the demultiplexer 16 as the program-video acquisition section. Moreover, the TV receiver 2 is provided with the video decoder 17 as a playback section.

The present invention is not limited to this. The above-described individual functional sections of the TV receiver 2 may be constituted by the other various kinds of hardware and software as long as the hardware or the software has the same functions.

Also, as long as an information processing apparatus having the same functions, the present invention is not limited to the TV receiver 2, and the present invention may be applied to the other information processing apparatuses, such as a personal computer, a cellular phone, etc.

### 7.11 Additional embodiment 11

Further, the present invention is not limited to the above-described embodiment and additional embodiments 1 to 10 described so far. That is to say, the present invention may be applied to the case of any combination of a part of or all of the above-described embodiment and additional embodiments 1 to 10, or the case of a partial extraction of them.

For example, additional embodiment 3 and additional embodiment 7 may be combined. In this manner, the user is allowed to view a content of a DVD, and at the same time, to be provided with the moving image and the sound retrieved on the Internet 3 as information on the content.

The present application contains subject matter related to that disclosed in Japanese Priority Patent Application JP 2008-256468 filed in the Japan Patent Office on October 1, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
a content-information acquisition section obtaining content information including character information on a content;
a keyword acquisition section transmitting the content information obtained by the content-information acquisition section to a keyword extraction server extracting a keyword from the content information and obtaining the keyword extracted from the content information;
a retrieval-information acquisition section transmitting the keyword obtained by the keyword acquisition section to a retrieval server retrieving information on the Internet by the keyword and obtaining the information retrieved by the keyword from the retrieval server; and
a display control section displaying the information obtained by the retrieval-information acquisition section to a display section.

2. The information processing apparatus according to Claim 1,
wherein the content is a program, and the content information is program information included in an electronic-program guide information.

3. The information processing apparatus according to Claim 1 or 2, further comprising:
a program-video acquisition section obtaining video data of the program; and
a playback section playing back the video data obtained by the program-video acquisition section;
wherein the display control section displays, on a display section, video on the basis of the video data played back by the playback section and the information obtained by the retrieval-information acquisition section.

4. A method of obtaining information comprising the steps of:
obtaining content information including character information on a content by a content-information acquisition section;
transmitting the obtained content information to a keyword extraction server extracting a keyword from the content information, and obtaining the keyword extracted from the content information by a keyword acquisition section from the keyword extraction server;
transmitting the obtained keyword to a retrieval server retrieving information on the Internet by the keyword, and obtaining the information retrieved by the keyword by a retrieval-information acquisition section from the retrieval server; and
displaying the obtained information by a display control section to a display section.

5. A recording medium recording a program for causing a computer to perform processing comprising the steps of:
obtaining content information including character information on a content by a content-information acquisition section;
transmitting the obtained content information to a keyword extraction server extracting a keyword from the content information, and obtaining the keyword extracted from the content information by a keyword acquisition section from the keyword extraction server;
transmitting the obtained keyword to a retrieval server retrieving information on the Internet by the keyword, and obtaining the information retrieved by a retrieval-information acquisition section using the keyword from the retrieval server; and
displaying the obtained information by a display control section to a display section.

6. An information retrieval system comprising:
a keyword extraction server extracting a keyword from content information including character information on a content;
a retrieval server retrieving information on the Internet by the keyword; and
an information processing apparatus obtaining the content information, transmitting the obtained content information to the keyword extraction server, obtaining the keyword extracted from the content information, transmitting the obtained keyword to the retrieval server, obtaining information retrieved by the keyword from the retrieval server, and displaying the obtained information to a display section.
